# DEMANDE DE BREVET EUROPEEN

(11) **EP 0 571 259 A1**
(43) Date de publication de la demande: **24.11.1993**
(21) Numéro de dépôt: 93401256.8
(22) Date de dépôt: 17.05.1993
(51) Int. Cl.: G06K 13/08

(54) **Dispositif de détection d'un code porté par un support, comprenant des moyens de guidage du support**

(30) Priorité: 19.05.1992 FR 9206071
(71) Demandeur: BKS ELECTRONIQUE, F-38800 Pont de Claix (FR)
(72) Inventeur: Caron, Patrick, F-38660 Saint Vincent de Mercuze (FR); Dutoit, Norbert, F-38180 Seyssins (FR); Kloepper, Guenter, F-38190 Brignoud (FR)
(74) Mandataire: Casalonga, Axel

(57) **Abrégé**

Dispositif de détection d'un code notamment d'identification porté par un support (3), par déplacement de ce support devant un moyen (19) de lecture de ce code, comprenant des moyens de guidage qui comprennent un canal (13) présentant une ouverture supérieure d'entrée (14) et une ouverture inférieure de sortie (15), ce canal présentant entre ces ouvertures des formes complémentaires de formes dudit support de manière à guider ce dernier, ainsi que des moyens d'arrêt (6) placés en dessous et à distance de l'ouverture inférieure de sortie du canal précité, de telle sorte que, ledit support (3) étant introduit dans ledit canal (13) par son ouverture supérieure d'entrée (14) puis étant libéré, il se déplace par gravité dans ledit canal en étant guidé grâce auxdites formes complémentaires, et il en ressort par son ouverture inférieure de sortie (15) puis est stoppé par lesdits moyens d'arrêt (6) pour pouvoir être repris, ledit moyen de lecture étant disposé latéralement audit canal dans une position telle que le code que porte ledit support passe devant ce moyen pour être lu.

## Description

La présente invention concerne un dispositif de détection d'un code notamment d'identification porté par un support par exemple une carte ou un badge, par déplacement de ce support devant un moyen de lecture de ce code.

Actuellement, pour lire un code magnétique, à barres, par perforations ou autres codes portés par une carte ou un badge, on met en place un dispositif d'entraînement qui déplace la carte devant une tête de lecture. Dans d'autres systèmes connus, la tête de lecture est placée sur le flanc d'une rainure et on fait passer la carte dans cette rainure en la tenant à la main par un côté. Dans ce cas, il n'est pas rare que la lecture ne puisse être faite au premier passage dans la rainure car il faut passer la carte dans cette rainure avec soin.

La présente invention a notamment pour but de remédier à cet inconvénient.

Le dispositif de détection d'un code notamment d'identification porté par un support, par déplacement de ce support devant un moyen de lecture de ce code, selon l'invention, comprend des moyens de guidage qui comprennent un canal présentant une ouverture supérieure d'entrée et une ouverture inférieure de sortie, ce canal présentant entre ces ouvertures des formes complémentaires de formes dudit support de manière à guider ce dernier, ainsi que des moyens d'arrêt placés en dessous et à distance de l'ouverture inférieure de sortie du canal précité, de telle sorte que, ledit support étant introduit dans ledit canal par son ouverture supérieure d'entrée puis étant libéré, il se déplace par gravité dans ledit canal en étant guidé grâce auxdites formes complémentaires, et il en ressort par son ouverture inférieure de sortie puis est stoppé par lesdits moyens d'arrêt pour pouvoir être repris, ledit moyen de lecture étant disposé latéralement audit canal dans une position telle que le code que porte ledit support passe devant ce moyen pour être lu.

Ainsi, comme le support est lâché lorsqu'il est introduit dans le canal précité par son ouverture supérieure d'entrée, il passe devant le moyen de lecture du code dans une position qui est quasiment à chaque fois la même et à une vitesse qui est quasiment à chaque fois la même. La lecture du code que porte le support est donc exécutée avec sussès à chaque fois au premier passage, sans intervention manuelle.

Selon l'invention, ledit support présente, en général, deux bords opposés, lesdits moyens de guidage présentant de préférence des formes opposées épousant les bords opposés du support.

Selon l'invention, ledit support est en général constitué par une carte ou un badge présentant deux bords opposés parallèles, lesdits moyens de guidage déterminant de préférence un canal dont deux parties opposées sont de section en forme de U de manière à guider ces deux bords opposés de la carte ou du badge.

Selon l'invention, lesdits moyens de guidage présentent de préférence au moins une ouverture latérale donnant accès audit canal.

Selon l'invention, lesdits moyens de guidage peuvent avantageusement présenter deux parties écartables l'un de l'autre de manière à pouvoir ouvrir le canal précité.

Selon l'invention, les bords de l'ouverture supérieure d'entrée du canal précité sont de préférence évasés.

Selon l'invention, lesdits moyens d'arrêt comprennent de préférence des moyens d'amortissement dudit support.

Selon l'invention, lesdits moyens d'arrêt comprennent de préférence un réceptacle dans lequel s'introduit la partie inférieure du support précité.

Selon l'invention, lesdits moyens d'arrêt comprennent de préférence des moyens empêchant ou limitant le basculement latéral dudit support.

Dans une variante, le support précité porte un code à barres.

La présente invention sera mieux comprise à l'étude de dispositifs de détection d'un code à barres porté par un support constitué par une carte, décrits à titre d'exemples non limitatifs et illustrés schématiquement par le dessin sur lequel :
- la figure 1 représente une vue extérieure frontale d'un premier dispositif de détection selon la présente invention ;
- la figure 2 représente une coupe verticale selon II-II du dispositif de détection de la figure 1 ;
- la figure 3 représente, en vue agrandie, une coupe horizontale selon III-III du dispositif de détection de la figure 1 ;
- la figure 4 représente une vue frontale extérieure d'un second dispositif de détection selon la présente invention ;
- la figure 5 représente une coupe verticale selon V-V du dispositif de détection de la figure 4 ;
- et la figure 6 représente une coupe horizontale selon VI-VI du dipositif de détection de la figure 4.

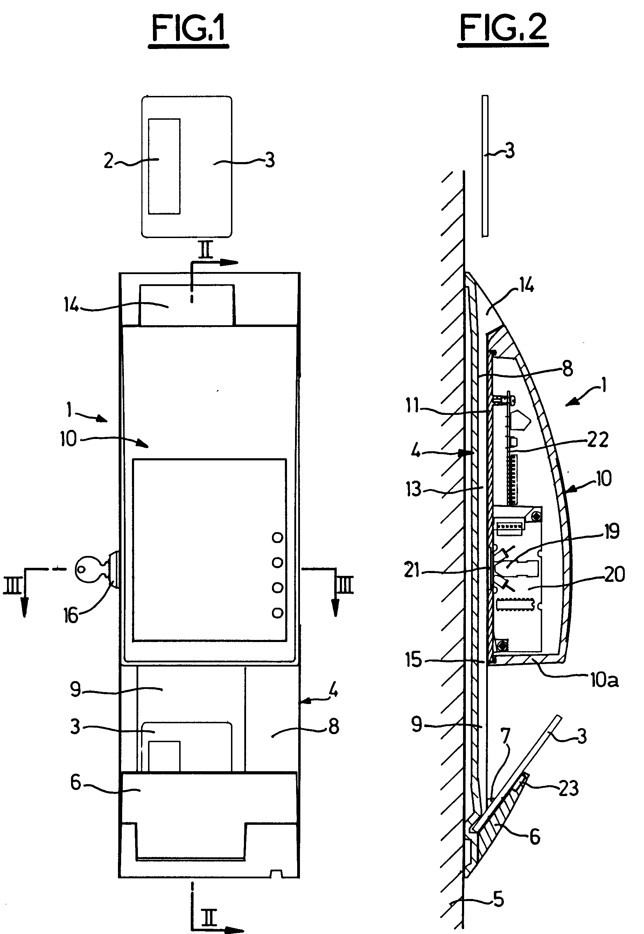

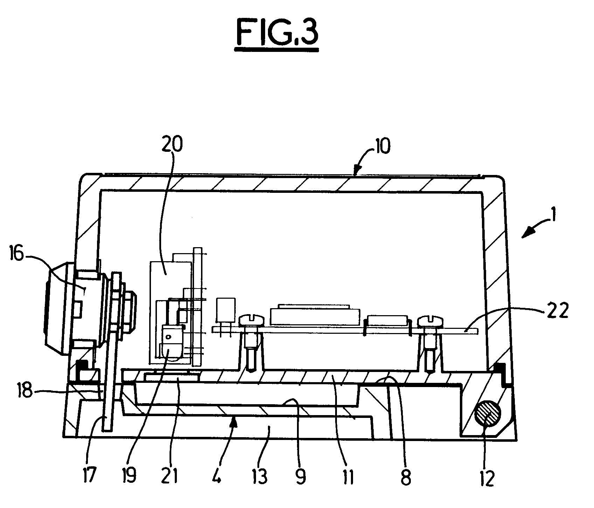

En se reportant tout d'abord aux figures 1 à 3, on va décrire un premier dispositif de détection repéré d'une manière générale par la référence 1 qui est destiné à la lecture d'un code à barres 2 placé sur l'une des faces d'une carte 3 de surface rectangulaire et à coins arrondis.

Le dispositif de détection 1 comprend une semelle 4 généralement plate qui est fixée contre une paroi verticale 5, par exemple un mur, par tous moyens connus tels que des vis non représentées. Cette semelle 4 présente à sa partie inférieure un rebord d'arrêt 6 qui s'étend vers l'extérieur et vers le haut de manière à déterminer un réceptacle 7 ouvert vers le haut et de section perpendiculaire à la paroi 5 en forme de V.

L'embase 4 présente, en deçà de sa face frontale 8, une rigole 9 qui s'étend verticalement depuis sa partie supérieure jusqu'au fond du réceptacle 7. Cette rigole 9 est de section horizontale en forme de U aplati, sa largeur étant légèrement supérieure à la largeur de la carte 3 et sa profondeur étant légèrement supérieure à l'épaisseur de cette carte 3.

Le dispositif de détection 1 comprend en outre une partie avant 10 constituée par un boîtier qui présente une paroi verticale arrière 11 et qui est, par l'un de ses côtés latéraux, montée de manière articulée sur l'embase 4 par l'intermédiaire d'un axe d'articulation vertical 12 de telle sorte que sa paroi arrière 11 vient en appui sur la surface frontale 8 de l'embase 4 en recouvrant sur une partie de sa hauteur la rigole 9. Le boîtier 10 détermine ainsi, avec l'embase 4 et dans cette rigole 9, un canal vertical 13 qui présente une ouverture supérieure d'entrée 14 située à la partie supérieure de l'embase 4 et une ouverture inférieure de sortie 15 qui est située à distance du réceptacle 7 formé à la partie inférieure de l'embase 4. La partie supérieure du boîtier 10 est inclinée en direction du canal 13 de telle sorte que l'ouveture d'entrée 14 est évasée. La distance entre le fond du réceptacle 7 et la paroi inférieure 10a du boîtier 10 est supérieure à la longueur de la carte 3.

Afin de maintenir le boîtier 10 dans la position précitée, ce boîtier 10 porte, à l'opposé de l'axe d'articulation 12, une serrure 16 à clé 16 qui présente une batteuse 17 dont l'extrémité vient en prise avec une partie 18 de l'embase 4. Lorsque cette serrure 16 est déverrouillée, on peut par pivotement écarter le boîtier 10 et l'on a ainsi un accès total au canal 13.

Sensiblement à un tiers de sa hauteur, le boîtier 10 renferme une tête de lecture de code à barres 19 portée par une carte de circuit électronique 20, cette tête de lecture 19 étant disposée en face d'un orifice traversant 21 de la paroi arrière 11 communiquant avec le canal 13. Ce circuit 20 est relié à un autre circuit 22 fixé dans le boîtier 10, qui est susceptible d'être relié à l'extérieur par des fils non représentés passant au travers de l'embase 4 de manière à ne pas être accessible ou visible lorsque le dispositif 1 est fixé.

Le dispositif de détection 1 peut être utilisé et fonctionne de la manière suivante.

Tenant la carte 3 dans la main, on l'introduit verticalement dans le canal 13 par son ouverture d'entrée supérieure 14, de telle sorte que le code à barres 2 qu'elle porte soit tourné vers l'avant, puis on lâche la carte. Cette dernière, glisse par gravité dans le canal 13 dans lequel elle est guidée et s'échappe de ce canal vertical 13 par son ouverture inférieure de sortie 15 pour venir en butée contre le rebord 13. la partie inférieure de la carte 3 est tenue dans le réceptacle 7 et sa partie supérieure bascule vers l'avant pour venir en appui contre la face supérieure du rebord 6 en passant en dessous et à distance de la face inférieure 10a du boîtier 10. Pour éviter le rebondissement de la carte, la face supérieure du rebord 6 est garnie d'une couche 23 en un matériau amortisseur. La carte 3 peut alors être saisie aisément par sa partie supérieure s'étendant au delà du rebord 6 et être reprise.

Lorsque la carte 3 glisse dans le canal 13, elle passe devant la tête de détection 19 qui, peut lire le code à barres 2 qu'elle porte dans des conditions de position et de vitesse de déplacement optimales.

Si la carte 3 se trouve immobilisée dans le canal 13, il suffit de déverrouiller la serrure 16 et d'écarter par pivotement le boitier 10 pour pouvoir la récupérer ou pour procéder éventuellement à un nettoyage des parois du canal 13 ou de la tête de lecture 19.

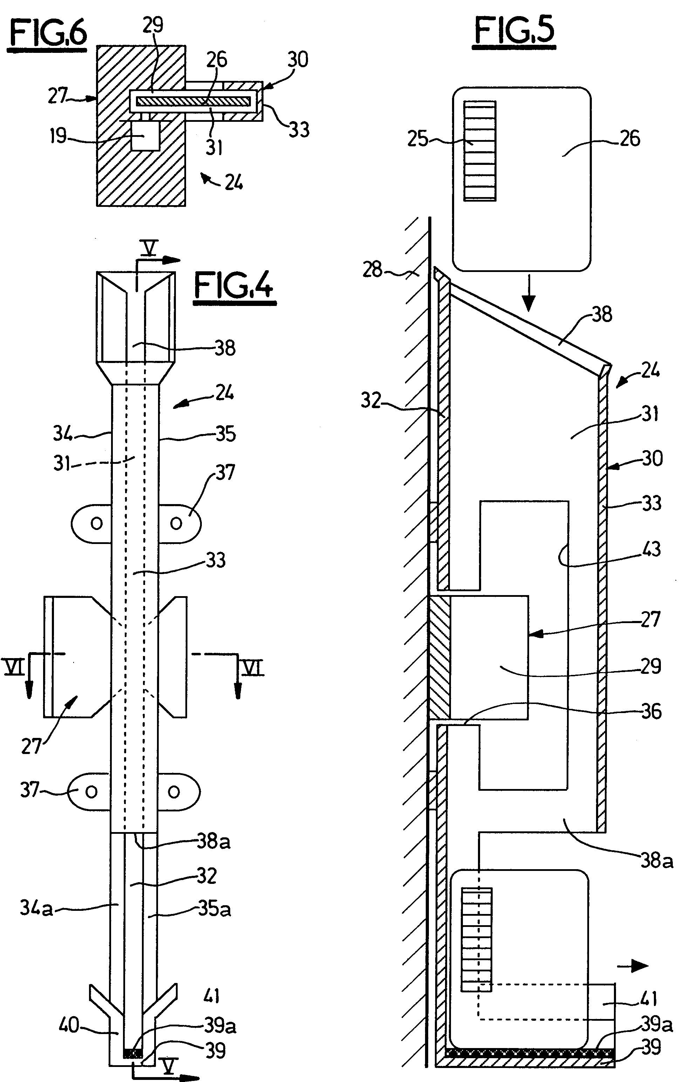

En se reportant aux figures 4 à 6, on va maintenant décrire un deuxième dispositif de détection qui est repéré d'une manière générale par la référence 24, qui fonctionne de la même manière que le dispositif de détection 1 qui vient d'être décrit et qui est destiné à la lecture d'un code à barres 25 porté par une carte 26 équivalente à la carte 3.

Ce dispositif de détection 24 comprend un bloc de lecture 27 qui est fixé contre une paroi verticale 28, par exemple un mur, par tous moyens connus et qui présente une rainure 29 qui s'étend verticalement et perpendiculairement à la paroi 28.

Le dispositif de détection 24 comprend en outre une pièce de guidage 30, en tôle ou en matière plastique, qui détermine un canal vertical 31 et qui présente pour cela une paroi arrière 32, une paroi avant 33, et deux parois latérales 34 et 35, la distance entre les parois 32 et 33 étant légèrement supérieure à la largeur de la carte 26, et la distance entre les parois latérales 34 et 35 étant légèrement supérieure à l'épaisseur de cette carte 26.

La pièce 30 présente une échancrure 36 qui est ménagée au travers de sa paroi arrière 32 et de ses parois latérales 34 et 35, la pièce 30 étant montée contre la paroi 28, à cheval sur le bloc de lecture 27, dans une position telle que le canal 31 s'étend perpendiculairement à la paroi 28 et en alignement avec la rainure 29 de ce bloc 27, le bloc de lecture 27 étant ainsi engagé dans l'échancrure 36 de la pièce de guidage 30. La pièce 30 étant fixée contre cette paroi 28 par l'intermédiaire de quatre pattes de fixation 37 prévues latéralement.

Le bord supérieur de la pièce de guidage 30 s'étend dans un plan incliné vers le bas et vers l'avant par rapport à la paroi 28 et les bords supérieurs de la paroi avant 33 et des parois latérales 34 et 35 sont pliés vers l'extérieur de manière à déterminer une ouverture supérieure d'entrée 38 du canal vertical 31 qui est évasée pour faciliter l'introduction de la carte 3.

Au delà de l'ouverture inférieure de sortie 39 du canal de guidage 31, la paroi arrière 32 de la pièce de guidage 30 et la partie des parois latérales 34 et 35 situées du côté de cette paroi arrière 32 présentent des prolongements 32a, 34a et 35a qui s'étendent verticalement vers le bas. A l'extrémité inférieure de ces prolongements, la pièce de guidage 30 présente une paroi horizontale d'arrêt 39 qui s'étend vers l'avant et qui est recouverte d'un matériau d'amortissement 39a, cette paroi d'arrêt 38 présentant des rebords de guidage 40 et 41 s'étendant vers le haut et évasés.

Comme dans l'exemple précédent, on introduit la carte 26 dans l'ouverture supérieure d'entrée 38 du canal 31 de la pièce de guidage 30 puis on la lâche. La carte 26 tombe dans ce canal 31 par gravité et en ressort par son extrémité inférieure de sortie 38a en ayant traversé la rainure verticale 29 du bloc 27. En fin de course, la partie inférieure de la carte 26 est en appui sur le matériau amortisseur 39a porté par la paroi d'arrêt 38 et est maintenu latéralement par les prolongements latéraux 34a et 35a. On peut alors la saisir et la retirer en la faisant glisser vers l'avant entre les rebords 40 et 41, en dessous des bords inférieurs de l'ouverture de sortie 38a.

Le bloc de lecture 27, étant, à l'intérieur, équipé d'une tête de lecture 42, cette tête de lecture peut lire le code à barres 25 porté par la carte 26 lorsque cette dernière passe dans la rainure 29.

Ce dispositif de guidage 24 présente les mémes avantages que le dispositif de détection 1.

On voit en outre que les parois latérales 34 et 35 de la pièce de guidage 30 présentent de grandes ouvertures 43 de part et d'autre desquelles le canal de guidage 31 se limite à deux portions opposées de section en forme de U guidant les deux bords opposés de la carte 26, ces ouvertures 43 permettant de voir la carte 26 dans le canal 31.

La présente invention ne se limite pas aux exemples ci-dessus décrits. En effet, on aurait pu prévoir de structurer les parois du canal de guidage de manière différente, prévoir des moyens d'arrêt de structure différente, un support de code de forme et d'encombrement différents qui pourrait porter d'autres codes que des codes à barres. On aurait pu en outre prévoir plusieurs têtes de lecture destinées à lire plusieurs codes portés par la carte ou autre support. On aurait pu prévoir un code de chaque côté de la carte ou deux codes de chaque côté de la carte afin que cette dernière puisse être introduite dans le canal de guidage dans une position ou dans un sens indifférents.

Par ailleurs, le dispositif de détection Selon l'invention peut être appliqué à bien des domaines et notamment au contrôle d'accès, à la surveillance de personnes ou d'objet, au cours de processus industriels de contrôle de déplacement.

La présente invention ne se limite pas aux exemples décrits. Bien d'autres variantes sont possibles sans sortir du cadre défini par les revendications annexées.

## Revendications

1. Dispositif de détection d'un code (2) notamment d'identification porté par un support (3), comprenant des moyens de guidage qui comprennent un canal (13) présentant une ouverture supérieure d'entrée (14) et une ouverture inférieure de sortie (15), ce canal présentant entre ces ouvertures des formes complémentaires de formes dudit support de manière à guider ce dernier, de telle sorte que, ledit support (3) étant introduit dans ledit canal (13) par son ouverture supérieure d'entrée(14) puis étant libéré, il se déplace par gravité dans ledit canal en étant guidé grâce auxdites formes complémentaires, et il en ressort par son ouverture inférieure de sortie (15) pour être repris, ainsi qu'un moyen de lecture disposé latéralement audit canal dans une position telle que le code que porte ledit support passe devant ce moyen pour être lu, **caractérisé par le fait** qu'il comprend en outre des moyens d'arrêt (6) placés en dessous et à distance de l'ouverture inférieure de sortie (15) du canal (13) précité et stoppant ledit support (3) après qu'il soit sorti dudit canal, lesdits moyens d'arrêt (6) comprenant un réceptacle (7) dans lequel s'introduit la partie inférieure du support précité ainsi que des moyens (6) empêchant ou limitant le basculement latéral dudit support.

2. Dispositif selon la revendication 1, caractérisé par le fait que ledit support (3) présente deux bords opposés et que lesdits moyens de guidage (13) présentent des formes opposées épousant les bords opposés du support.

3. Dispositif selon l'une des revendications 1 et 2, caractérisé par le fait que ledit support est constitué par une carte (3) ou un badge présentant deux bords opposés parallèles et que lesdits moyens de guidage déterminent un canal dont deux parties opposées sont de section en forme de U de manière à guider ces deux bords opposés de la carte ou du badge.

4. Dispositif selon l'une quelconque des revendications précédentes, caractérisé par le fait que lesdits moyens de guidage présentent au moins une ouverture latérale (43) donnant accès audit canal.

5. Dipositif selon l'une quelconque des revendications précédentes, caractérisé par le fait que lesdits moyens de guidage présentent deux parties (4, 10) écartables l'un de l'autre de manière à pouvoir ouvrir le canal précité.

6. Dispositif selon l'une quelconque des revendications précédentes, caractérisé par le fait que les bords de l'ouverture supérieure d'entrée (14) du canal précité (13) sont évasés.

7. Dispositif selon l'une quelconque des revendications précédentes, caractérisé par le fait que lesdits moyens d'arrêt (6) comprennent des moyens d'amortissement (23) dudit support (3).

8. Dispositif selon l'une quelconque des revendications précédentes, caractérisé par le fait que le support précité porte un code à barres (2).
